# EUROPÄISCHE PATENTSCHRIFT

(11) **EP 3 762 228 B1**
(45) Veröffentlichungstag und Bekanntmachung des Hinweises auf die Patenterteilung: **02.08.2023**
(21) Anmeldenummer: 19701682.7
(22) Anmeldetag: 01.02.2019
(51) Int. Cl.: B32B 17/10, B60Q 3/62, B60Q 3/208, F21V 8/00

(54) **VERBUNDSCHEIBE MIT EINEM FUNKTIONSELEMENT UND BELEUCHTUNG**
LAMINATED PANE CONTAINING A FUNCTIONAL ELEMENT AND LIGHTING
VERRE FEUILLETÉ POURVU D'UN ÉLÉMENT FONCTIONNEL ET D'ÉCLAIRAGE

(30) Priorität: 06.03.2018 EP 18160215
(43) Veröffentlichungstag der Anmeldung: 13.01.2021
(73) Patentinhaber: SAINT-GOBAIN GLASS FRANCE, 92400 Courbevoie (FR)
(72) Erfinder: SCHULZ, Valentin, 52382 Niederzier (DE); KLEIN, Marcel, 52499 Baesweiler (DE); SCHURSE, Sebastian, 52531 Übach-Palenberg (DE)
(74) Vertreter: Gebauer, Dieter Edmund
(86) Internationale Anmeldenummer: PCT/EP2019/052475
(87) Internationale Veröffentlichungsnummer: WO 2019/170330

(56) Entgegenhaltungen:
- WO-A1-2007/077099
- DE-A1-102004 016 808
- US-A1- 2009 279 004
- US-A1- 2016 325 528

## Beschreibung

Die Erfindung betrifft eine Verbundscheibe, insbesondere eine Verbundscheibe eines Fahrzeugs, sowie ein Verfahren zu deren Herstellung. Die erfindungsgemäße Verbundscheibe kann beispielsweise als Dachscheibe eines Fahrzeugs ausgebildet sein.

Verbundscheiben bestehen aus mindestens einer Außenscheibe, einer Innenscheibe und einer klebefähigen Zwischenschicht, die die Außenscheibe mit der Innenscheibe flächig verbindet. Typische Zwischenschichten sind dabei Polyvinylbutyralfolien, die neben ihren Klebeeigenschaften eine hohe Zähigkeit und eine hohe akustische Dämpfung aufweisen. Die Zwischenschicht verhindert den Zerfall der Verbundglasscheibe bei einer Beschädigung. Die Verbundscheibe bekommt lediglich Sprünge, bleibt aber formstabil.

Verbundscheiben mit elektrisch schaltbaren optischen Eigenschaften sind aus dem Stand der Technik bekannt. Solche Verbundscheiben enthalten ein Funktionselement, welches typischerweise eine aktive Schicht zwischen zwei Flächenelektroden enthält. Die optischen Eigenschaften der aktiven Schicht können durch eine an die Flächenelektroden angelegte Spannung verändert werden. Ein Beispiel hierfür sind elektrochrome Funktionselemente, die beispielsweise aus US 20120026573 A1 und WO 2012007334 A1 bekannt sind. Ein weiteres Beispiel sind SPD-Funktionselemente (suspended particle device), die beispielsweise aus EP 0876608 B1 und WO 2011033313 A1 bekannt sind. Durch die angelegte Spannung lässt sich die Transmission von sichtbarem Licht durch elektrochrome oder SPD-Funktionselemente steuern. Verbundscheibe mit solchen Funktionselementen können also auf komfortable Weise elektrisch ihre optischen Eigenschaften ändern. Derartige Verbundscheiben haben jedoch den Nachteil, dass die Verbundscheibe keinerlei Beleuchtung aufweist.

Beleuchtung, insbesondere Konturbeleuchtung, kann als ein attraktives Betrachtungserlebnis in Fahrzeugen dienen. Um Akzent- oder Funktionsbeleuchtung in einem Fahrzeug zu realisieren muss die Beleuchtung in Fahrzeugteilen integriert werden. Im Stand der Technik ist eine Vielzahl einzelner Leuchtmittel bekannt, die aus mehreren leistungsschwachen Lichtquellen bestehen. Die Installation von Lichtquellen erfordert zwangsläufig viel Raum, da sie aufgrund ihrer Abmessung als eine zusätzliche Komponente im Fahrzeug verbaut werden müssen.

WO 2007/077099 A1 zeigt eine Verbundscheibe mit einem Funktionselement und einer Schicht oder optischen Fasern, an denen Licht an Streuzentren ausgekoppelt wird. Die Streuzentren sind über die Verbundscheibe flächig verteilt angeordnet. US 2009/0279004 A1 zeigt eine Rahmenschicht für ein Funktionselement.

Der vorliegenden Erfindung liegt die Aufgabe zugrunde, eine verbesserte Verbundscheibe mit elektrisch steuerbaren optischen Eigenschaften und Beleuchtung bereitzustellen.

Die Aufgabe der vorliegenden Erfindung wird erfindungsgemäß durch eine Verbundscheibe mit elektrisch steuerbaren optischen Eigenschaften gemäß Anspruch 1 gelöst. Bevorzugte Ausführungen gehen aus den Unteransprüchen hervor.

Die erfindungsgemäße Verbundscheibe mit elektrisch steuerbaren optischen Eigenschaften umfasst mindestens:
- eine Außenscheibe, eine erste Zwischenschicht, eine zweite Zwischenschicht und eine Innenscheibe,
- ein Funktionselement mit elektrisch steuerbaren optischen Eigenschaften, das zwischen der ersten Zwischenschicht und der zweiten Zwischenschicht angeordnet ist, und
- eine thermoplastische Rahmenschicht, die rahmenartig das Funktionselement umgibt, wobei die Außenscheibe und die Innenscheibe über die erste Zwischenschicht, die zweite Zwischenschicht und die thermoplastische Rahmenschicht miteinander verbunden sind, und ein Lichtleiter zumindest teilweise zwischen der Außenscheibe und der Innenscheibe angeordnet ist.

Die Begriffe Außenscheibe und Innenscheibe dienen lediglich zur Unterscheidung einer ersten Scheibe und einer zweiten Scheibe. Im Falle einer Verwendung der Verbundscheibe als Fahrzeugscheibe oder als Gebäudescheibe ist die Außenscheibe bevorzugt aber nicht notwendigerweise dem Außenraum der Verbundscheibe zugewandt und die Innenscheibe dem Innenraum.

Die erfindungsgemäße Verbundscheibe ist bevorzugt dafür vorgesehen, in einer Fensteröffnung eines Fahrzeugs den Innenraum gegenüber der äußeren Umgebung abzutrennen. Mit Innenraum kann der Fahrzeuginnenraum gemeint sein und mit Innenscheibe wird im Sinne der Erfindung die dem Innenraum zugewandte Scheibe der Verbundscheibe bezeichnet. Mit Außenscheibe wird die der äußeren Umgebung zugewandte Scheibe bezeichnet.

Dabei weist die Verbundscheibe ein Funktionselement mit elektrisch steuerbaren optischen Eigenschaften auf, das zwischen der ersten Zwischenschicht und der zweiten Zwischenschicht angeordnet ist. Eine thermoplastische Rahmenschicht umgibt das Funktionselement, wobei ein Lichtleiter zumindest teilweise zwischen der Außenscheibe und der Innenscheibe angeordnet ist. Das Funktionselement kann bei der Herstellung der Verbundscheibe einfach zwischen der ersten Zwischenschicht und der zweiten Zwischenschicht eingelegt werden. Die erste Zwischenschicht, die zweite Zwischenschicht und die thermoplastische Rahmenschicht enthalten zumindest ein thermoplastisches Polymer, beispielsweise Ethylenvinylacetat, Polyvinylbutyral, Polyurethan und/oder Gemische und/oder Copolymere davon. Die Dicke der thermoplastischen Verbindungsfolien beträgt bevorzugt von 0,05 mm bis 2 mm, beispielsweise 0,38 mm oder 0,76 mm. Die Verbindung erfolgt unter Einwirkung von Hitze, Vakuum und/oder Druck nach an sich bekannten Verfahren.

Die erfindungsgemäße Verbundscheibe mit elektrisch steuerbaren optischen Eigenschaften weist durch die Verwendung eines Lichtleiters in der Verbundscheibe eine attraktive Akzentbeleuchtung auf.

Damit einhergehend führt die Integration des Lichtleiters in die Verbundscheibe zu einer enormen Platzersparnis, da ein zusätzliches Lichtmodul an der Verbundscheibe entfällt. Erfindungsgemäß ist der Lichtleiter zwischen der thermoplastischen Rahmenschicht und der zweiten Zwischenschicht angeordnet. Dadurch dass der Lichtleiter zwischen der thermoplastischen Rahmenschicht und der zweiten Zwischenschicht angeordnet ist und die thermoplastische Rahmenschicht und die zweite Zwischenschicht weich und nachgiebig sind, wird der Lichtleiter während eines Laminationsprozesses zwischen der Innenscheibe und Außenscheibe eingebettet und fixiert. Zur einfacheren Herstellung der Verbundscheibe kann der Lichtleiter vor dem Laminationsprozess unter Einwirkung von Druck und Temperatur in einer Oberfläche der Zwischenschicht vorfixiert werden. Durch diese Anordnung des Lichtleiters unweit der Innenscheibe ist dieser klar und deutlich im Innenraum erkennbar.

In einer weiteren vorteilhaften Ausgestaltung der erfindungsgemäßen Verbundscheibe ist der Lichtleiter durch mindestens ein Befestigungsmittel mit der Zwischenschicht verbunden. Dies hat den besonderen Vorteil, dass der Lichtleiter während der Herstellung der Verbundscheibe an seinem Ort fixiert ist und ein Verrutschen vermieden wird. Die Befestigungsmittel sind bevorzugt transparent, so dass die Durchsicht durch die Verbundscheibe nicht oder nicht wesentlich beeinträchtigt wird.

In einer weiteren Ausgestaltung ist die thermoplastische Rahmenschicht derart dimensioniert, dass diese das Funktionselement bündig aufnehmen kann.

In der erfindungsgemäßen Verbundscheibe ist der Lichtleiter mindestens eine optische Faser aus Glas und/oder Kunststoff. Durch die Verwendung von optischen Fasern aus Glas und/oder Kunststoff zur Leitung von Licht kann das Licht vorteilhafterweise mit geringem Aufwand an eine beliebige Position der Verbundscheibe transportiert werden.

Der Lichtleiter ist zumindest teilweise lichtstreuend ausgebildet. Dabei emittiert der Lichtleiter Licht in Richtung einer Außenseite der Verbundscheibe. Der Lichtleiter kann einen zumindest abschnittsweise transparenten, schlauchförmigen Mantel oder alternativ keine Umhüllung aufweisen. Die Emission von Licht kann sich über einen ausgedehnten Abschnitt des Lichtleiters erstrecken oder punktförmig erfolgen.

Zusätzlich kann zur ersten und zweiten Zwischenschicht eine dritte Zwischenschicht zur Reflexion von Infrarotstrahlung vorgesehen sein. In diesem Fall ist die dritte Zwischenschicht zwischen der ersten Zwischenschicht und der zweiten Zwischenschicht angeordnet.

Die dritte Zwischenschicht kann Polyvinylbutyral, Ethylenvinylacetat, Polyurethan und/oder Gemische und/oder Copolymere davon und eine Polymerfolie aufweisen. Bevorzugt wird eine Schicht Polyvinylbutyral (PVB) mit einer Polyethylenterephthalat-Folie (PET) verwendet. Die PET-Folie ist besonders vorteilhaft im Hinblick auf die Stabilität der dritten Zwischenschicht. Die PVB-Folien enthalten zumindest ein thermoplastisches Polymer, beispielsweise Ethylenvinylacetat, Polyvinylbutyral, Polyurethan und/oder Gemische und/oder Copolymere davon. Die Dicke der thermoplastischen PVB-folie beträgt bevorzugt von 0,05 mm bis 2 mm, beispielsweise 0,38 mm oder 0,76 mm.

Die PET-Folie weist eine infrarotreflektierende Beschichtung auf. Die infrarotreflektierende Beschichtung enthält Silber, Titandioxid, Aluminiumnitrid oder Zinkoxid, wobei bevorzugt Silber eingesetzt wird. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die infrarotreflektierende und leitfähige Beschichtung kann beispielsweise zwei, drei oder vier elektrisch leitfähige Schichten enthalten. Die infrarotreflektierende Beschichtung kann zusätzlich dielektrische Schichten aufweisen, die beispielsweise zur Regulierung des Schichtwiderstands, zum Korrosionsschutz oder zur Verminderung der Reflexion dienen. Eine solche infrarotreflektierende Beschichtung ist bevorzugt auf einer zur ersten Zwischenschicht hingewandten Oberfläche aufgebracht.

In einer besonders vorteilhaften Ausgestaltung der erfindungsgemäßen Verbundscheibe ist das Funktionselement ein PDLC-Funktionselement (polymer dispersed liquid crystal). Das PDLC-Funktionselement weist eine aktive Schicht auf, die ungeordnet ausgerichtete Flüssigkristalle enthält. Dies führt zu einer starken Streuung des durch die aktive Schicht tretenden Lichts. Weiterhin weist das PDLC-Funktionselement zwei Flächenelektroden auf. Wird an den Flächenelektroden eine elektrische Spannung angelegt, so richten sich die Flüssigkristalle in eine Richtung aus und die Transmission von Licht durch die aktive Schicht wird wesentlich erhöht. Ohne angelegte elektrische Spannung zeichnet sich das PDLC-Funktionselement durch ein weißes, milchiges Aussehen aus, das als Sichtschutz dient. Alternativ ist das Funktionselement ein SPD-Funktionselement (suspended particle device). Dabei enthält die aktive Schicht suspendierte Partikel, welche bevorzugt in eine zähflüssige Matrix eingelagert sind. Die Absorption von Licht durch die aktive Schicht ist durch das Anlegen einer Spannung an die Flächenelektroden veränderbar, welche zu einer Orientierungsänderung der suspendierten Partikel führt.

Vorteilhafterweise ist das Funktionselement zentral in der Verbundscheibe angeordnet. Das Funktionselement kann über Kontaktelemente elektrisch angesteuert werden.

Die Scheiben enthalten bevorzugt Glas, besonders bevorzugt Flachglas, Floatglas, Quarzglas, Borosilikatglas, Kalk-Natron-Glas oder klare Kunststoffe, besonders bevorzugt starre klare Kunststoffe, beispielsweise Polycarbonat oder Polymethylmethacrylat. Die Scheiben können klar und transparent sein oder auch getönt oder gefärbt. Die Dicke der Scheiben kann breit variieren und so den Erfordernissen im Einzelfall angepasst werden. Die Dicke jeder Scheibe beträgt bevorzugt von 0,5 mm bis 15 mm, besonders bevorzugt von 1 mm bis 5 mm. Die Verbundscheibe kann eine beliebige dreidimensionale Form aufweisen. Die Verbundscheibe ist bevorzugt plan oder leicht oder stark in einer Richtung oder in mehreren Richtungen des Raumes gebogen.

Es versteht sich, dass eine Verbundscheibe eine oder mehrere Lichtleiter aufweisen kann. Dabei sind bevorzugt alle Lichtleiter gemeinsam oder jeder Lichtleiter einzeln mit einem Leuchtmittel gekoppelt. Der oder die Lichtleiter kann bzw. können in jeder beliebigen, technisch möglichen Form in der Verbundscheibe angeordnet sein, geradlinig, geschwungen oder als Schriftzug oder Symbol.

Ein weiterer Aspekt der Erfindung ist eine Verbundscheibenanordnung mindestens umfassend:
- eine erfindungsgemäße Verbundscheibe mit elektrisch steuerbaren optischen Eigenschaften und
- ein Leuchtmittel zur Einkopplung von Licht in den Lichtleiter.

Das vom Leuchtmittel abgestrahlte Licht wird dabei in die optische Faser eingekoppelt und weitergeleitet oder nach außen emittiert. Dazu weist der Lichtleiter ein an das Leuchtmittel gekoppeltes erstes Ende auf, ein zweites Ende sowie eine zwischen dem ersten Ende und dem zweiten Ende sich erstreckende Seitenfläche. Die Seitenfläche dient zumindest teilweise einer radialen Eimission von Licht.

Die Verwendung eines Leuchtmittels zur Einkopplung von Licht in den Lichtleiter der Verbundscheibe hat den Vorteil, dass das Leuchtmittel an einer beliebigen Position angeordnet werden kann. Auf diese Weise ist die äußere Ausgestaltung der Verbundscheibe nicht von dem Leuchtmittel abhängig. Das Leuchtmittel kann an einer der Kanten der Verbundscheibe angeordnet sein.

Die Leuchtmittel können farbig oder weiß sein. Die Leuchtmittel können auch im ultravioletten Bereich Licht abgeben, sofern die optische Faser oder ihre Umgebung das ultraviolette Licht in sichtbares Licht wandeln können. Bevorzugte Lichtfarben sind rot (wegen der ausgeprägten Signalwirkung), grün (wegen der hohen Empfindlichkeit des menschlichen Auges für das grüne Farbspektrum) und blau (wegen seiner besonders ästhetischen und wenig blendenden Wirkung).

Vorteilhafterweise umfasst das Leuchtmittel eine Lichtquelle, insbesondere eine Laserdiode. Die Verwendung einer Laserdiode hat den Vorteil, dass sie besonders leistungsstark und effizient ist. Auf diese Weise kann an mehreren Stellen der Verbundscheibe ein Beleuchtungsakzent gesetzt werden. In dem Fall, dass das Funktionselement von dem Lichtleiterleiter umrahmt wird, ist eine vollständige Ausleuchtung des Funktionselements möglich.

Die Erfindung umfasst außerdem ein Verfahren zur Herstellung einer erfindungsgemäßen Verbundscheibe mit elektrisch steuerbaren optischen Eigenschaften, wobei zumindest
a) eine Außenscheibe, eine erste Zwischenschicht, ein Funktionselement mit elektrisch steuerbaren optischen Eigenschaften, eine thermoplastische Rahmenschicht, die rahmenartig das Funktionselement umgibt, eine zweite Zwischenschicht und eine Innenscheibe in dieser Reihenfolge übereinander angeordnet werden, sowie ein Lichtleiter, der zumindest teilweise zwischen der Außenscheibe und der Innenscheibe eingebettet ist, wobei der Lichtleiter zwischen der thermoplastischen Rahmenschicht und der zweiten Zwischenschicht angeordnet wird,
b) die Außenscheibe und die Innenscheibe durch Lamination verbunden werden, wobei aus der ersten Zwischenschicht, der zweiten Zwischenschicht und der Rahmenschicht ein Verbund mit eingelagertem Funktionselement und Lichtleiter gebildet wird.

Die elektrische Kontaktierung der Flächenelektroden des Funktionselements erfolgt bevorzugt vor dem Laminieren der Verbundscheibe.

Eventuell vorhandene Drucke, beispielsweise opake Abdeckdrucke oder aufgedruckte Sammelleiter zur elektrischen Kontaktierung des Funktionselements werden bevorzugt im Siebdruckverfahren aufgebracht.

Das Laminieren erfolgt bevorzugt unter Einwirkung von Hitze, Vakuum und/oder Druck. Es können an sich folgenden Verfahren zur Lamination verwendet werden: Autoklavverfahren, Vakuumlaminatoren oder Kombinationen davon.

Zusätzlich kann in Schritt a) eine dritte Zwischenschicht zur Reflexion von Infrarotstrahlung vorgesehen sein. In diesem Fall ist die dritte Zwischenschicht zwischen der ersten Zwischenschicht und der zweiten Zwischenschicht angeordnet. Die dritte Zwischenschicht kann als ein sogenannter Bilayer ausgebildet sein. Der Bilayer umfasst dann Polyvinylbutyral, Ethylenvinylacetat, Polyurethan und/oder Gemische und/oder Copolymere davon und eine Polymerfolie. Bevorzugt wird eine Schicht Polyvinylbutyral (PVB) mit einer Polyethylenterephthalat-Folie (PET) verwendet. Die PET-Folie weist eine infrarotreflektierende Beschichtung auf. Bevorzugt werden die PET-Folie und PVB-Folie von jeweils einer Rolle abgerollt, zu einem Bilayer verbunden und der Bilayer wird wieder auf eine Rolle aufgerollt. Zur Herstellung des Bilayers werden die in aufgerollter Form vorliegende PET-Folie und PVB-Folie abgerollt, beispielsweise durch Durchlaufen eines Ofens erwärmt und anschließend über eine Presse oder ein Rollenpaar zusammengepresst. In einer Ausführungsform werden die PET-Folien und PVB-Folie in einem kontinuierlichen Prozess abgerollt aufeinandergelegt und über ein beheiztes Rollenpaar verbunden. Die Druckeinwirkung der Rollen und der Wärmeübertrag auf die Folien bei Durchlaufen der Rollen genügen dabei, um eine hinreichende Haftung der Folien zu erzielen. Der Bilayer selbst kann danach ebenfalls wieder in Rollenform gebracht werden, wodurch Lagerung und Transport vereinfacht werden.

Bevorzugt wird in Schritt a) der Bilayer zwischen der ersten Zwischenschicht und der thermoplastischen Rahmenschicht angeordnet.

Die Verwendung eines Bilayers ermöglicht auch bei komplex gewölbter Scheibengeometrie eine nahezu faltenfreie Schichtung in der Verbundscheibe.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1: eine Draufsicht auf eine Ausgestaltung der erfindungsgemäßen Verbundscheibenanordnung,
- Figur 2: eine Querschnittsdarstellung entlang der Schnittlinie A-A' durch die Verbundscheibe aus Figur 1,
- Figur 3: eine schematische Ansicht einer Scheibenzusammensetzung nach einem nicht erfindungsgemäßen Verfahren,
- Figur 4: eine schematische Ansicht einer alternativen Scheibenzusammensetzung nach einem nicht erfindungsgemäßen Verfahren, und
- Figur 5: ein Flussdiagramm einer Ausführungsform des erfindungsgemäßen Verfahrens.

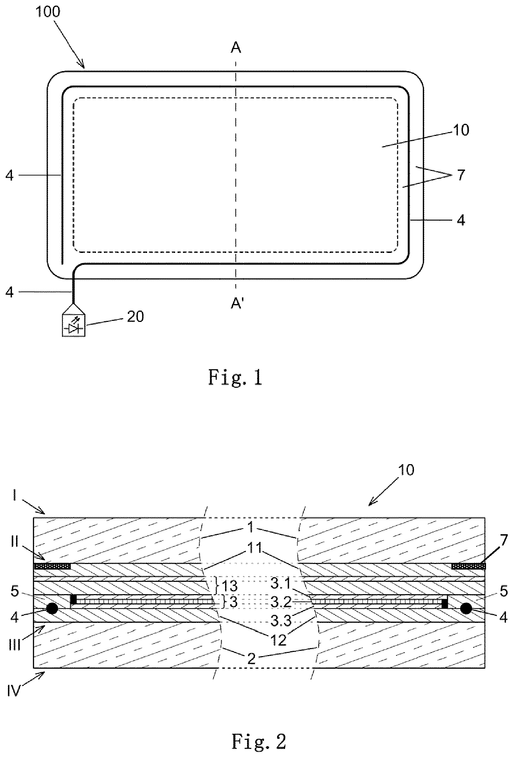

Figur 1 zeigt eine Draufsicht auf eine erfindungsgemäße Verbundscheibenanordnung 100, die eine erfindungsgemäße Verbundscheibe 10 und ein Leuchtmittel 20 umfasst. Figur 2 zeigt eine Querschnittdarstellung entlang der Schnittlinie A-A' durch die Verbundscheibe 10 aus Figur 1. Die Verbundscheibe 10 ist in diesem Beispiel als Dachscheibe eines Personenkraftwagens ausgebildet.

Die erfindungsgemäße Verbundscheibe 10 enthält eine Außenscheibe 1 mit einer innenseitigen Oberfläche II, eine Innenscheibe 2 mit einer außenseitigen Oberfläche III und eine erste Zwischenschicht 11, eine zweite Zwischenschicht 12, eine dritte Zwischenschicht 13 und eine thermoplastische Rahmenschicht 5. Die erste Zwischenschicht 11 verbindet die innenseitige Oberfläche II der Außenscheibe 1 mit der dritten Zwischenschicht 13. Die dritte Zwischenschicht 13 wiederum verbindet die erste Zwischenschicht 11 mit der thermoplastischen Rahmenschicht 5. Die thermoplastische Rahmenschicht 5 wird über die zweite Zwischenschicht 12 mit der außenseitigen Oberfläche III der Innenscheibe 2 verbunden.

Die Außenscheibe 1 und die Innenscheibe 2 bestehen beispielsweise aus Kalk-Natron-Glas und weisen beispielsweise eine Dicke von jeweils 2,1 mm auf. Die erste Zwischenschicht 11, die zweite Zwischenschicht 12, die dritte Zwischenschicht 13 und die thermoplastische Rahmenschicht 5 sind jeweils beispielsweise Folien aus Polyvinylbutyral (PVB) mit einer Dicke von 0,38 mm. Es versteht sich, dass auch andere Glasscheiben oder Polymerscheiben als Außenscheibe 1 und Innenscheibe 2 verwendet werden können. Des Weiteren kann die Dicke der Außenscheibe 1 und Innenscheibe 2 an die jeweilige Verwendung angepasst sein.

In diesem Ausgestaltungsbeispiel ist zwischen der thermoplastischen Rahmenschicht 5 und der zweiten Zwischenschicht 12 ein lichtstreuender Lichtleiter 4 angeordnet.

Die Verbundscheibe 10 ist mit einem Funktionselement 3 im zentralen Bereich der Verbundscheibe 10 ausgestattet. Das Funktionselement 3 ist ein PDLC-Funktionselement, das in der thermoplastischen Rahmenschicht an allen Seiten bündig eingelagert ist. Die thermoplastische Rahmenschicht bildet somit ein Passepartout für das Funktionselement 3, welches rundum in thermoplastisches Material eingekapselt ist. Das Funktionselement 3 ist eine Mehrschichtfolie, bestehend aus einer aktiven Schicht 3.2 zwischen einer ersten Trägerfolie 3.1 mit einer als Flächenelektrode fungierenden elektrisch leitfähigen Beschichtung und einer zweiten Trägerfolie 3.3 mit einer als Flächenelektrode fungierenden elektrisch leitfähigen Beschichtung. Die aktive Schicht 3.2 enthält eine Polymermatrix mit darin dispergierten Flüssigkristallen, die sich in Abhängigkeit der an die Flächenelektroden angelegten elektrischen Spannung ausrichten. Auf diese Weise können die optischen Eigenschaften des Funktionselements 3 geregelt werden. Die erste und zweite Trägerfolie 3.1 und 3.3 bestehen aus PET und weisen eine Dicke von beispielsweise 50 µm auf. Die elektrisch leitfähige Beschichtung der ersten Trägerfolie 3.1 bzw. der zweiten Trägerfolie 3.3 weisen zur aktiven Schicht 3.2 hin. Die elektrisch leitfähige Beschichtung bestehen beispielsweise aus ITO mit einer Dicke im Nanometerbereich. Die elektrisch leitfähigen Beschichtungen sind jeweils über Sammelleiter und Verbindungskabel (z.B. "Flat Connector") mit einer Versorgerspannung elektrisch verbindbar. Die Seitenkanten des Funktionselements sind zumindest teilweise mit einer Randversiegelung versehen, die durch ein transparentes Acryl-Klebeband ausgebildet ist. Diffusion in die oder aus der aktiven Schicht 3.2 wird dadurch verhindert. Da die Randversiegelung transparent ist, fallen die Seitenkanten des Funktionsmoduls nicht störend auf. Da durch die Randversiegelung eine Diffusion von Weichmachern in die aktive Schicht 3.2 verhindert wird, kann Alterung des Funktionselements 5 erheblich reduziert werden.

Alternativ können auch weitere, hier nicht dargestellte Zwischenschichten zwischen der Außenscheibe 1 und der Innenscheiben 2 angeordnet sein, wobei der Lichtleiter 4 zwischen den beiden Scheiben 1 und 2 angeordnet ist.

Bei der Herstellung der Verbundscheibe 10 wird die Außenscheibe 1 durch Lamination über die Zwischenschichten mit der Innenscheibe 2 verbunden. Die Außenscheibe 1 und die Innenscheibe 2 sind bei den dafür üblichen Temperaturen und Drücken sehr starr und unnachgiebig. Die erste, zweite und dritte Zwischenschicht 11, 12, 13 sowie die thermoplastische Rahmenschicht sind dann plastisch, so dass der Lichtleiter 4 in die Oberfläche der zweiten Zwischenschicht 12 eindringen kann und dort eingebettet wird.

Der lichtstreuende Lichtleiter 4 hat einen Durchmesser d von jeweils 90 µm und ist dazu geeignet, über seine Seitenwand entlang seiner Erstreckungslänge Licht auszusenden. Das Licht wird dabei über eine Stirnfläche des Lichtleiters 4 in den Lichtleiter 4 eingekoppelt. Dazu ist an einem Ende des Lichtleiters 4 ein Leuchtmittel 20 angeordnet. Das Leuchtmittel 20 besteht beispielsweise aus einer Laserdiode, die beispielsweise über einen Reflektor Licht in die Lichtleiter 4 einkoppeln kann. Bei Anlegen einer Spannung an die Laserdiode wird dann Licht in den Lichtleiter 4 eingekoppelt. Der Lichtleiter 4 streut dann das Licht an seiner Oberfläche entlang seiner gesamten Erstreckungslänge, so dass der Lichtleiter 4 über seine gesamte Erstreckungslänge leuchtet.

Die Verbundscheibe 10 weist in diesem Beispiel auf einem umlaufenden Randbereich der innenseitigen Oberfläche II der Außenscheibe 1 einen opaken Abdeckdruck 7 auf, beispielsweise einen Schwarzdruck aus einer keramischen Farbe, die durch Einbrennen eine feste Verbindung mit der gläsernen Oberfläche III der Innenscheibe 2 eingeht. Der Abdeckdruck 7 hat die Aufgabe, die Durchsicht auf die Klebestellen zu verdecken, mit denen die Verbundscheibe 10 in eine Fahrzeugkarosserie eingeklebt ist. Gleichzeitig wird die Klebestelle vor Lichteinstrahlung und insbesondere vor der Einstrahlung von UV-Licht geschützt, die eine beschleunigte Alterung der Klebestelle bewirken würde.

Der Lichtleiter 4 ist in diesem Beispiel rahmenförmig im Randbereich der Verbundscheibe 10 angeordnet. Der Lichtleiter 4 ist hier beispielsweise in einem Bereich angeordnet, der von der innenseitigen Oberfläche II der Außenscheibe 2 durch den Abdeckdruck 7 verdeckt wird. Dies bedeutet, dass der Lichtleiter 4 vom Fahrzeuginnenraum gesehen werden kann. Insbesondere gelangt auch an den Seitenwänden des Lichtleiters 4 austretendes Licht in den Fahrzeuginnenraum.

Das Leuchtmittel 20 ist hier beispielsweise eine leistungsstarke Laserdiode. Die mit dieser Verbundscheibe 10 hergestellte Verbundscheibenanordnung 100 ist beispielsweise derart konfiguriert, dass das Leuchtmittel 20 den Lichtleiter 4 ausleuchtet. Dies kann unabhängig oder zeitgleich zur übrigen Fahrzeugbeleuchtung erfolgen.

Das Leuchtmittel 20 kann dabei einfarbig sein oder verschiedene Akzente durch verschiedene Farben setzen. Unterschiedliche Farben lassen eine attraktive Beleuchtung des Fahrzeugs gut sichtbar darstellen.

Es versteht sich, dass der Lichtleiter 4 nicht oder nicht nur entlang einer Seitenkante einer Scheibe angeordnet sein muss, sondern beliebig angeordnet sein kann. Insbesondere können ein oder mehrere Lichtleiter 4 wellenartig, z.B. in Form einer Sinuswelle, angeordnet sein. Es versteht sich weiterhin, dass der Lichtleiter 4 Bereiche aufweisen kann, in denen Licht über die Seitenwände des Lichtleiters 4 austritt, so dass nicht zusammenhängende Symbole beleuchtet werden können. Die Ästhetik der Verbundscheibe 10 wird dadurch deutlich ansprechender gestaltet.

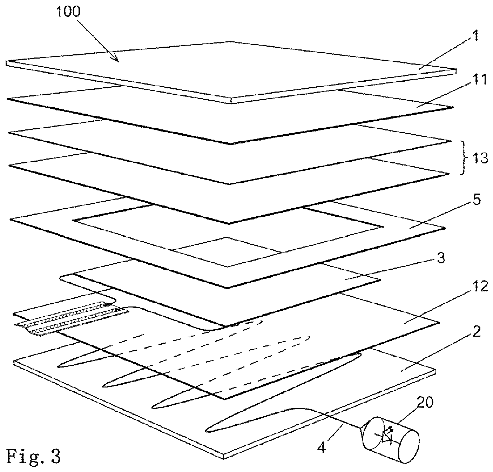

Figur 3 zeigt die Zusammensetzung der nach einem nicht erfindungsgemäßen Verfahren hergestellten erfindungsgemäßen Verbundscheibenanordnung 100. Auf die Innenscheibe 2, hier als untere Grundscheibe dargestellt, wird ein wellenartiger Lichtleiter 4 flächig angeordnet. Der Lichtleiter 4 wird von der zweiten Zwischenschicht 12 bedeckt, auf die das Funktionselement 3 mit der thermoplastischen Rahmenschicht 5 angeordnet wird. Auf das Funktionselement 3 mit der thermoplastischen Rahmenschicht 5 wird die dritte Zwischenschicht 13 aufgelegt. Die dritte Zwischenschicht 13 enthält den Bilayer, bestehend aus einer PVB-Folie und einer PET-Folie. In der bevorzugten Ausführungsform verfügt die PET-Folie über eine infrarotreflektierende Beschichtung. Die erste Zwischenschicht 11 wird planar auf der dritten Zwischenschicht 11 angeordnet und durch die Außenscheibe 1 bedeckt.

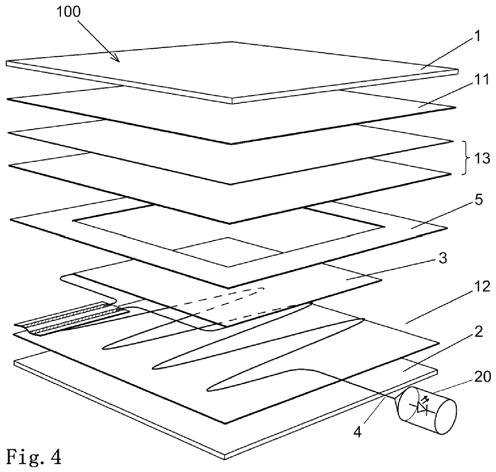

Figur 4 zeigt eine Zusammensetzung einer weiteren Ausgestaltung einer nicht erfindungsgemäßen Verbundscheibenanordnung 100. Die Verbundscheibenanordnung 100 entspricht im Wesentlichen der Ausführung aus Figur 3. Der wellenartige Lichtleiter 4 ist allerdings zwischen der zweiten Zwischenschicht 12 und dem Funktionselement 3 mit der thermoplastischen Rahmenschicht 5 angeordnet.

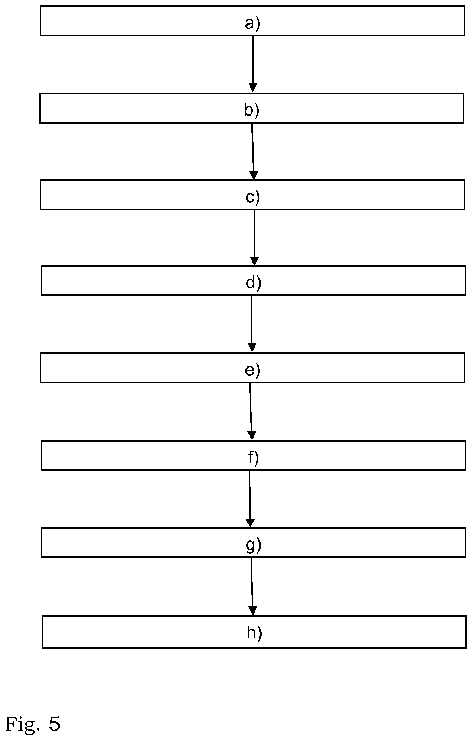

Figur 5 zeigt ein Ausführungsbeispiel des erfindungsgemäßen Herstellungsverfahrens anhand eines Flussdiagramms. Das erfindungsgemäße Verfahren umfasst beispielsweise die folgenden Schritte:
a) Bereitstellen einer Außenscheibe 1
b) Auflegen einer ersten Zwischenschicht 11 auf die Außenscheibe 1
c) Auflegen einer dritten Zwischenschicht 13 auf der ersten Zwischenschicht 11, wobei die dritte Zwischenschicht 13 mit einer infrarotreflektierenden Beschichtung versehen ist
d) Auflegen einer thermoplastischen Rahmenschicht 5 auf die dritte Zwischenschicht 13, wobei die thermoplastischen Rahmenschicht 5 zum Aufnehmen eines Funktionselements 3 vorgesehen ist
e) Passgenaues Einsetzen des Funktionselements 3 in die thermoplastische Rahmenschicht 5, das ein PDLC- Funktionselement ist
f) Auflegen einer zweiten Zwischenschicht 12 auf das Funktionselement 3 und die thermoplastische Rahmenschicht 5 und das PDLC- Funktionselement 3
g) Auflegen einer Innenscheibe 2 auf die zweite Zwischenschicht 12
h) Laminieren des Stapels in einem Verbundprozess, z.B. Autoklaven.

### Bezugszeichenliste:

- 1: Außenscheibe
- 2: Innenscheibe
- 3: PDLC - Funktionselement
- 3.1: erste Trägerfolie mit einer elektrisch leitfähigen Beschichtung
- 3.2: aktive Schicht des PDLC-Funktionselements
- 3.3: zweite Trägerfolie mit einer elektrisch leitfähigen Beschichtung
- 4: Lichtleiter
- 5: thermoplastische Rahmenschicht
- 7: opaker Abdeckdruck
- 10: Verbundscheibe
- 11: erste Zwischenschicht
- 12: zweite Zwischenschicht
- 13: dritte Zwischenschicht
- 20: Leuchtmittel
- 100: Verbundscheibenanordnung

- A-A': Schnittlinie
- I: außenseitige Oberfläche der Außenscheibe 1
- II: innenseitige Oberfläche der Außenscheibe 1
- III: außenseitige Oberfläche der Innenscheibe 2
- IV: innenseitige Oberfläche der Innenscheibe 2

## Patentansprüche

1. Verbundscheibe (10) mit elektrisch steuerbaren optischen Eigenschaften, umfassend:
- eine Außenscheibe (1), eine erste Zwischenschicht (11), eine zweite Zwischenschicht (12) und eine Innenscheibe (2),
- ein Funktionselement (3) mit elektrisch steuerbaren optischen Eigenschaften, das zwischen der ersten Zwischenschicht (11) und der zweiten Zwischenschicht (12) angeordnet ist, und
- eine thermoplastische Rahmenschicht (5), die rahmenartig das Funktionselement (3) umgibt,
wobei die Außenscheibe (1) und die Innenscheibe (2) über die erste Zwischenschicht (11), die zweite Zwischenschicht (12) und die thermoplastische Rahmenschicht (5) miteinander verbunden sind, und ein Lichtleiter (4) zumindest teilweise zwischen der Außenscheibe (1) und der Innenscheibe (2) angeordnet ist, wobei der Lichtleiter (4) mindestens eine optische Faser aus Glas und/oder Kunststoff aufweist und zumindest teilweise lichtstreuend ausgebildet ist, wobei der Lichtleiter (4) zwischen der thermoplastischen Rahmenschicht (5) und der zweiten Zwischenschicht (12) angeordnet ist.

2. Verbundscheibe (10) nach Anspruch 1, **dadurch gekennzeichnet, dass** eine dritte Zwischenschicht (13) zur Reflexion von Infrarotstrahlung vorgesehen ist.

3. Verbundscheibe (10) nach Anspruch 2, **dadurch gekennzeichnet, dass** die dritte Zwischenschicht (13) zwischen der ersten Zwischenschicht (11) und der zweiten Zwischenschicht (12) angeordnet ist.

4. Verbundscheibe (10) nach einem der Ansprüche 2 oder 3, **dadurch gekennzeichnet, dass** die dritte Zwischenschicht (13) Polyvinylbutyral, Ethylenvinylacetat, Polyurethan und/oder Gemische und/oder Copolymere davon und eine Polymerfolie aufweist.

5. Verbundscheibe (10) nach Anspruch 4, **dadurch gekennzeichnet, dass** die Polymerfolie eine infrarotreflektierende Beschichtung aufweist.

6. Verbundscheibe (10) nach einem der Ansprüche 1 bis 5, **dadurch gekennzeichnet, dass** das Funktionselement (3) ein PDLC-Funktionselement ist.

7. Verbundscheibe (10) nach einem der Ansprüche 1 bis 6, **dadurch gekennzeichnet, dass** das Funktionselement (3) zentral in der Verbundscheibe (10) angeordnet ist.

8. Verbundscheibe (10) nach einem der Ansprüche 1 bis 7, **dadurch gekennzeichnet, dass** das Funktionselement (3) Kontaktelemente zur elektrischen Steuerung umfasst.

9. Verbundscheibenanordnung (100), umfassend:
- eine Verbundscheibe (10) nach einem der Ansprüche 1 bis 8 und
- ein Leuchtmittel (20) zur Einkopplung von Licht in einen Lichtleiter (4).

10. Verbundscheibenanordnung (100) nach Anspruch 9, **dadurch gekennzeichnet, dass** das Leuchtmittel (20) eine Lichtquelle, insbesondere eine Laserdiode, umfasst.

11. Verfahren zur Herstellung einer Verbundscheibe (10) mit elektrisch steuerbaren optischen Eigenschaften nach einem der Ansprüche 1 bis 8, mit den folgenden Schritten
a) Anordnen einer Außenscheibe (1), einer ersten Zwischenschicht (11), eines Funktionselements (3) mit elektrisch steuerbaren optischen Eigenschaften, einer thermoplastischen Rahmenschicht (5), die rahmenartig das Funktionselement umgibt, einer zweiten Zwischenschicht (12) und einer Innenscheibe (2) in dieser Reihenfolge übereinander, wobei ein Lichtleiter (4) zwischen der thermoplastischen Rahmenschicht (5) und der zweiten Zwischenschicht (12) angeordnet wird,
b) Verbinden der Außenscheibe (1) und der Innenscheibe (2) durch Lamination, wobei aus der ersten Zwischenschicht (11), der zweiten Zwischenschicht (12) und der thermoplastischen Rahmenschicht (5) ein Verbund mit eingelagertem Funktionselement (3) und Lichtleiter (4) gebildet wird.

12. Verfahren nach Anspruch 11, bei welchem der Lichtleiter (4) vor der Lamination durch Einwirkung von Druck und Temperatur in einer Oberfläche der zweiten Zwischenschicht vorfixiert wird.

13. Verfahren nach Anspruch 11, bei welchem der Lichtleiter (4) vor der Lamination durch mindestens ein Befestigungsmittel mit der zweiten Zwischenschicht verbunden wird.

## Claims

1. Composite pane (10) having electrically controllable optical properties, comprising:
- an outer pane (1), a first intermediate layer (11), a second intermediate layer (12), and an inner pane (2),
- a functional element (3) having electrically controllable optical properties, which is arranged between the first intermediate layer (11) and the second intermediate layer (12), and
- a thermoplastic frame layer (5), which surrounds the functional element (3) in the manner of a frame,
wherein the outer pane (1) and the inner pane (2) are bonded to one another via the first intermediate layer (11), the second intermediate layer (12), and the thermoplastic frame layer (5); and an optical waveguide (4) is arranged at least partially between the outer pane (1) and the inner pane (2), wherein the optical waveguide (4) comprises at least one optical fiber made of glass and/or plastic and is at least partially light scattering, wherein the optical waveguide (4) is arranged between the thermoplastic frame layer (5) and the second intermediate layer (12).

2. Composite pane (10) according to claim 1, **characterized in that** a third intermediate layer (13) is provided for reflecting infrared radiation.

3. Composite pane (10) according to claim 2, **characterized in that** the third intermediate layer (13) is arranged between the first intermediate layer (11) and the second intermediate layer (12).

4. Composite pane (10) according to one of claims 2 or 3, **characterized in that** the third intermediate layer (13) comprises polyvinyl butyral, ethylene vinyl acetate, polyurethane, and/or mixtures and/or copolymers thereof and a polymer film.

5. Composite pane (10) according to claim 4, **characterized in that** the polymer film has an infrared-reflecting coating.

6. Composite pane (10) according to one of claims 1 through 5, **characterized in that** the functional element (3) is a PDLC functional element.

7. Composite pane (10) according to one of claims 1 through 6, **characterized in that** the functional element (3) is arranged centrally in the composite pane (10).

8. Composite pane (10) according to one of claims 1 through 7, **characterized in that** the functional element (3) includes contact elements for electrical control.

9. Composite pane assembly (100), comprising:
- a composite pane (10) according to one of claims 1 through 8 and
- a lighting means (20) for coupling light into an optical waveguide (4).

10. Composite pane assembly (100) according to claim 9, **characterized in that** the lighting means (20) includes a light source, in particular a laser diode.

11. Method for producing a composite pane (10) having electrically controllable optical properties according to one of claims 1 through 8, comprising the following steps
a) arranging an outer pane (1), a first intermediate layer (11), a functional element (3) having electrically controllable optical properties, a thermoplastic frame layer (5), which surrounds the functional element in the manner of a frame, a second intermediate layer (12), and an inner pane (2) above one another in this order; wherein an optical waveguide (4) is arranged between the thermoplastic frame layer (5) and the second intermediate layer (12),
b) joining the outer pane (1) and the inner pane (2) by lamination, wherein a composite with an embedded functional element (3) and optical waveguide (4) is formed from the first intermediate layer (11), the second intermediate layer (12), and the thermoplastic frame layer (5).

12. Method for producing a composite pane (10) according to claim 11, in which the optical waveguide (4) is pre-fixed in a surface of the second intermediate layer before the lamination process under the influence of pressure and temperature.

13. Method for producing a composite pane (10) according to claim 11, in which the optical waveguide (4) is joined to the second intermediate layer by at least one fastening means before the lamination.

## Revendications

1. Vitre composite (10) ayant des propriétés optiques contrôlables électriquement, comprenant :
- un panneau extérieur (1), une première couche intermédiaire (11), une deuxième couche intermédiaire (12) et un panneau intérieur (2),
- un élément fonctionnel (3) aux propriétés optiques contrôlables électriquement, disposé entre la première couche intermédiaire (11) et la seconde couche intermédiaire (12), et
- une couche cadre thermoplastique (5), qui entoure l'élément fonctionnel (3) à la manière d'un cadre,
dans lequel le panneau extérieur (1) et le panneau intérieur (2) sont liés l'un à l'autre par la première couche intermédiaire (11), la deuxième couche intermédiaire (12) et la couche de cadre thermoplastique (5), et un guide d'ondes optiques (4) est disposé au moins partiellement entre la vitre extérieure (1) et la vitre intérieure (2), le guide d'ondes optiques (4) comprenant au moins une fibre optique en verre et/ou en plastique et diffusant au moins partiellement la lumière, le guide d'ondes optiques (4) étant disposé entre la couche de cadre thermoplastique (5) et la deuxième couche intermédiaire (12).

2. Vitre composite (10) selon la revendication 1, **caractérisée par le fait qu'**une troisième couche intermédiaire (13) est prévue pour réfléchir le rayonnement infrarouge.

3. Vitre composite (10) selon la revendication 2, **caractérisé en ce que** la troisième couche intermédiaire (13) est disposée entre la première couche intermédiaire (11) et la deuxième couche intermédiaire (12).

4. Vitre composite (10) selon l'une des revendications 2 ou 3, **caractérisé en ce que** la troisième couche intermédiaire (13) comprend du butyral de polyvinyle, de l'éthylène-acétate de vinyle, du polyuréthane, et/ou leurs mélanges et/ou copolymères et un film polymère.

5. Vitre composite (10) selon la revendication 4, **caractérisé en ce que** le film polymère a un revêtement réfléchissant les infrarouges.

6. Vitre composite (10) selon l'une des revendications 1 à 5, **caractérisée par le fait que** l'élément fonctionnel (3) est un élément fonctionnel PDLC.

7. Vitre composite (10) selon l'une des revendications 1 à 6, **caractérisée par le fait que** l'élément fonctionnel (3) est disposé au centre de la vitre composite (10).

8. Vitre composite (10) selon l'une des revendications 1 à 7, **caractérisée par le fait que** l'élément fonctionnel (3) comprend des éléments de contact pour la commande électrique.

9. Assemblage de vitre composite (100), comprenant :
- une vitre composite (10) selon l'une des revendications 1 à 8 et
- un moyen d'éclairage (20) pour coupler la lumière dans un guide d'ondes optiques (4).

10. Assemblage de vitre composite (100) selon la revendication 9, **caractérisé par le fait que** le moyen d'éclairage (20) comprend une source de lumière, en particulier une diode laser.

11. Procédé de fabrication d'une vitre composite (10) ayant des propriétés optiques contrôlables électriquement selon l'une des revendications 1 à 8, comprenant les étapes suivantes
a) disposer un panneau extérieur (1), une première couche intermédiaire (11), un élément fonctionnel (3) ayant des propriétés optiques contrôlables électriquement, une couche cadre thermoplastique (5), qui entoure l'élément fonctionnel à la manière d'un cadre, une deuxième couche intermédiaire (12) et un panneau intérieur (2) les unes au-dessus des autres dans cet ordre et un guide d'ondes optiques (4) étant disposé entre la couche cadre thermoplastique (5) et la deuxième couche intermédiaire (12),
b) joindre le panneau extérieur (1) et le panneau intérieur (2) par laminage, dans lequel un composite avec un élément fonctionnel intégré (3) et un guide d'ondes optiques (4) est formé à partir de la première couche intermédiaire (11), de la deuxième couche intermédiaire (12) et de la couche de cadre thermoplastique (5).

12. Procédé de fabrication d'une vitre composite (10) selon la revendication 11, dans lequel le guide d'ondes optiques (4) est pré-fixé dans une surface de la deuxième couche intermédiaire avant le processus de laminage sous l'influence de la pression et de la température.

13. Procédé de fabrication d'un vitrage composite (10) selon la revendication 11, dans lequel le guide d'onde optique (4) est relié à la deuxième couche intermédiaire par au moins un moyen de fixation avant le laminage.
